(19) Europäisches Patentamt
European Patent Office
Office européen des brevets

(11) EP 0 697 590 A1

(12) EUROPÄISCHE PATENTANMELDUNG

(43) Veröffentlichungstag:
21.02.1996 Patentblatt 1996/08

(51) Int. Cl.⁶: $G01N\ 21/64$, $G01P\ 5/00$

(21) Anmeldenummer: 95112947.7

(22) Anmeldetag: 17.08.1995

(84) Benannte Vertragsstaaten:
AT BE CH DE DK ES FR GB GR IE IT LI NL PT SE

(30) Priorität: 18.08.1994 DE 4429239

(71) Anmelder: BASF AKTIENGESELLSCHAFT
D-67056 Ludwigshafen (DE)

(72) Erfinder:
• Friedrich, Thomas, Dr.
D-64283 Darmstadt (DE)

• Horn, Dieter, Dr.
D-69120 Heidelberg (DE)
• Klingler, Jürgen, Dr.
D-67112 Mutterstadt (DE)
• Wiese, Harm, Dr.
D-69115 Heidelberg (DE)

(74) Vertreter: Geissler, Bernhard, Dr. et al
D-81633 München (DE)

(54) **Verfahren zur Fluoreszenz-Korrelations-Spektroskopie und Vorrichtung zu dessen Durchführung**

(57) Ein Verfahren zur Fluoreszenz-Korrelations-Spektroskopie und eine Vorrichtung zu dessen Durchführung erlauben die Bestimmung von Strömungsgeschwindigkeiten, Diffusionskoeffizienten und Volumenkonzentrationen.

Von einer Lichtquelle ausgesandtes Anregungslicht wird mittels einer ersten Lichtleitfaser zu einem Faserkoppler und von dort mittels einer zweiten Lichtleitfaser zu einer Probe geleitet. Das von Probenpartikeln ausgesandte Fluoreszenzlicht wird mittels der zweiten Lichtleitfaser zu dem Faserkoppler und von dort mittels einer dritten Lichtleitfaser zu einem Detektor geleitet.

**FIG. 1(A)**

EP 0 697 590 A1

## Beschreibung

Die vorliegende Erfindung bezieht sich auf ein Verfahren und eine Vorrichtung zur Fluoreszenz-Korrelations-Spektroskopie (FCS). Insbesondere bezieht sich die Erfindung auf die Bestimmung der Strömungsgeschwindigkeit und der thermischen Diffusionskonstante von Partikeln, die eigenfluoreszieren oder mit fluoreszierenden Stoffen markiert sind.

Die FCS ist ein bekanntes Verfahren zur Bestimmung von Strömungsgeschwindigkeiten, Diffusionskoeffizienten und Volumenkonzentrationen. D.Magde, E.L.Elson, W.W.Webb, Phys.Rev.Lett. 29(1972), 705-708 und N.L. Thomson, "Topics in Fluorescence Spectroscopy, Vol. 1" (J.R. Lakowicz, Ed.), Plenum Press, New York, 1991, 337-410, beschreiben ein derartiges Verfahren.

Bei der FCS werden in einem Teil des Probenvolumens, dem Beobachtungsvolumen, durch zugeführtes Anregungslicht Probenpartikel zur Fluoreszenzemission stimuliert. Das Fluoreszenzlicht wird aufgenommen und einem Detektor zugeführt. Die am Detektor registrierte Photonenrate schwankt mit der Anzahl von Teilchen, die sich zum jeweiligen Zeitpunkt in dem Beobachtungsvolumen aufhalten. Aus diesen Signalfluktuationen können über eine Autokorrelationsfunktion die verschiedenen oben genannten Größen errechnet werden.

Die notwendigen Fluktuationen treten nur dann auf, wenn das Beobachtungsvolumen so klein ist, daß eintretende und austretende Teilchen zu einer Veränderung der Signalrate führen. Andernfalls treten im statistischen Mittel immer genau soviele Teilchen in das Beobachtungsvolumen ein wie aus ihm austreten, sodaß die Signalrate weitgehend konstant bleibt. Eine Auswertung des gemessenen Signals ist dann nicht möglich.

Typische Beobachtungsvolumina liegen im Bereich weniger Kubikmikrometer. Sie zu erreichen stellt eines der Hauptprobleme der FCS dar.

Dieses Problem kann durch die Verwendung einer konfokalen Mikroskopoptik gelöst werden. Dabei werden in dem Beleuchtungs- und in dem Beobachtungsstrahlengang einer Standard-Mikroskopanordnung jeweils in einer Zwischenbildebene Pinhole-Blenden angebracht, so daß das Bild der Beleuchtungsblende in dem untersuchten Objekt genau auf die Öffnung der Beobachtungsblende fällt. Damit ist das beobachtete Volumen auf einen sehr engen Bereich in der Objektebene beschränkt.

Eine solche Anordnung hat erhebliche Nachteile, die sich aus der Verwendung einer Optik ergeben. Die Optik ist teuer, baut groß, muß aufwendig justiert werden und ist empfindlich gegen Schmutz und Erschütterungen. Ein mobiler Einsatz solcher Anlagen ist praktisch undenkbar. Ausgeschlossen ist es, die Anlage zur Untersuchung an schwer zugänglichen Stellen, etwa in Leitungsrohren oder im menschlichen Körper zu verwenden, da die zu untersuchende Probe immer unmittelbar an die Optik herangebracht werden muß.

Aufgabe der Erfindung ist es, ein Verfahren für die Fluoreszenz-Korrelations-Spektroskopie bereitzustellen, das bei Erreichung des notwendigen kleinen Beobachtungsvolumens einfach ist, mobil eingesetzt werden kann und eine Messung an schwer zugänglichen Stellen erlaubt, sowie eine Vorrichtung zu dessen Durchführung zu schaffen.

Diese Aufgabe wird erfindungsgemäß durch die in den Ansprüchen definierten Verfahren und Vorrichtungen gelöst.

Die Erfindung stellt somit ein Verfahren bzw. eine Vorrichtung zur Fluoreszenz-Korrelations-Spektroskopie zur Verfügung das einfach ist und einen mobilen Einsatz auch an schwer zugänglichen Stellen erlaubt.

Bei dem erfindungsgemäßen Verfahren wird von einer Lichtquelle Anregungslicht mittels einer ersten Lichtleitfaser zu einem Faserkoppler geleitet. Von dort wird es mit Hilfe einer zweiten Lichtleitfaser zu einer Probe geleitet. Von Probenpartikeln ausgesandtes Fluoreszenzlicht wird mit der zweiten Lichtleitfaser zu dem Faserkoppler und von dort mittels einer dritten Lichtleitfaser zu einem Detektor geleitet.

Bei einer Variation des Verfahrens wird Anregungslicht, das von einer Lichtquelle ausgesandt wird mittels einer Lichtleitfaser zu einer Probe geleitet. Das von Probenpartikeln ausgesandte Fluoreszenzlicht wird mittels einer weiteren Lichtleitfaser zu einem Detektor geleitet.

Eine bevorzugten Ausführungsform verwendet Monomoden-Lichtleitfasern für einige oder alle Lichtübertragungen zwischen Lichtquelle, Probe, Detektor und ggf. Faserkoppler.

In einer bevorzugten Ausführungsform wird das Ende der Lichtleitfaser direkt in die Probe eingetaucht. Eine weitere bevorzugte Ausführungsform sieht vor, daß das Ende der Lichtleitfaser 4 durch eine transparente Schicht von der Probe getrennt ist.

Bei Verwendung zweier getrennter Fasern für Anregung und Detektion kann eine der beiden Fasern, oder beide in die Probe eingetaucht oder von ihr getrennt werden.

Bei einer weiteren vorteilhaften Ausführungsform wird das probenseitige Ende der Lichtleitfaser angeschrägt, d.h. die Normale auf die probenseitige Endfläche der zweiten Lichtleitfaser schließt mit der Faserachse einen Winkel von mindestens 1° ein. Bevorzugt wird ein Winkel bei dem der reflektierte Teil des Anregungslichtes nicht mehr in den Kern der Faser zurückläuft. Bei Verwendung getrennter Lichtleitfasern für Anregung und Detektion können eine oder beide Lichtleitfasern angeschrägt sein.

Das Ende der zweiten Lichtleitfaser wird bei einer anderen bevorzugten Ausführungsform als gezogene Spitze ausgebildet und mit einer Metallschicht bedampft. Dasselbe gilt bei Verwendung getrennter Fasern für Anregung und Detektion für eine der beiden, oder beide Fasern.

Bei einer bevorzugten Ausführungsform wird im Abstand d kleiner 0,1 mm von dem probenseitigen Ende der zweiten Lichtleitfaser eine Platte angebracht. Bei Verwendung getrennter Lichtleitfasern für Anregung und Detektion kann sich der Abstand d auf jede der beiden Fasern beziehen.

Bei der erfindungsgemäßen Vorrichtung zur Durchführung der Fluoreszenz-Korrelations-Spektroskopie verbindet eine erste Lichtleitfaser eine Lichtquelle mit einem Faserkoppler. Eine zweite Lichtleitfaser verbindet den Faserkoppler mit einer Probe, eine dritte Lichtleitfaser verbindet den Faserkoppler und einen Detektor.

Eine andere Form der erfindungsgemäßen Vorrichtung zur Durchführung der Fluoreszenz-Korrelations-Spektroskopie besteht aus eine Lichtquelle, die mittels einer Lichtleitfaser mit einer Probe verbunden ist und einem Detektor mittels einer weiteren Lichtleitfaser mit der Probe verbunden ist.

Bei einer bevorzugten Ausführungsform bestehen einzelne oder mehrere Lichtleitfasern zur Verbindung von Lichtquelle, Probe, Detektor und ggf. Faserkoppler aus Monomoden-Lichtleitfasern.

Eine weitere bevorzugte Ausführungsform weist eine zweite Lichtleitfaser auf, die für direktes Eintauchen in die Probe ausgelegt ist. Bei getrennten Lichtleitfasern für Anregung und Detektion können eine oder beide Lichtleitfasern entsprechend ausgelegt sein.

In einer anderen vorteilhaften Ausführungsform ist die zweite Lichtleitfaser durch eine transparente Schicht von der Probe getrennt. Bei getrennten Lichtleitfasern für Anregung und Detektion können eine oder beide Lichtleitfasern in dieser Weise von der Probe getrennt sein.

Bei einer anderen bevorzugten Ausführungsform weist die zweite Lichtleitfaser ein angeschrägtes probenseitiges Ende auf, d.h. die Normale auf die probenseitige Endfläche der Lichtleitfaser schließt mit der Faserachse einen Winkel von mindestens 1° ein. Bevorzugt wird ein Winkel bei dem der reflektierte Teil des Anregungslichtes nicht mehr in den Kern der Faser zurückläuft. Bei Verwendung getrennter Lichtleitfasern für Anregung und Detektion können eine oder beide Lichtleitfasern in der beschriebenen Weise angeschrägt sein.

Bei einer weiteren vorteilhaften Ausführungsform ist das probenseitige Ende der zweiten Lichtleitfaser als gezogene Spitze ausgebildet und mit einer Metallschicht bedampft. Bei getrennten Lichtleitfasern für Anregung und Detektion können eine oder beide Faserenden gezogen und bedampft sein.

Eine bevorzugte Ausführungsform der Vorrichtung weist eine Platte im Abstand d kleiner 0,1 mm von dem probenseitige Ende der zweiten Lichtleitfaser auf. Bei getrennter Anregung und Detektion kann sich der angegebene Abstand d auf jedes der beiden Faserenden beziehen.

Die in den Figuren 1 bis 7 dargestellten bevorzugten Ausführungsformen werden im Folgenden im Einzelnen beschrieben.

Figuren 1(A) und 1(B), sowie Figur 2(A) zeigen die erfindungsgemäße Anordnung im Prinzip.

Figuren 2(B) und 2(C) zeigen verschiedene bevorzugte Anordnungen der probenseitigen Faserenden zueinander, wenn die Anregung und Detektion mit getrennten Lichtleitfasern geschieht.

Figur 3 zeigt ein Faserende, das durch eine Trennschicht von einer Probe getrennt ist.

Figur 4 zeigt ein gerades und ein angeschrägtes Faserende nebeneinander.

Figur 5 zeigt eine gezogene und mit einer Metallschicht bedampfte Lichtleitfaser.

Figur 6 zeigt eine Lichtleitfaser von der im Abstand d eine Platte zur Variation des Beobachtungsvolumens angebracht ist.

Figur 7 zeigt den erfindungsgemäßen Versuchsaufbau, wenn mehrere Proben zugleich in Multiplexverfahren gemessen werden sollen.

Figur 8 zeigt eine aus der Signalrate gemessene Autokorrelationsfunktion und Figur 9 stellt die Fluoreszenzintensität in Abhängigkeit von der Konzentration fluoreszierender Teilchen in einem Graphen für ein Messbeispiel dar.

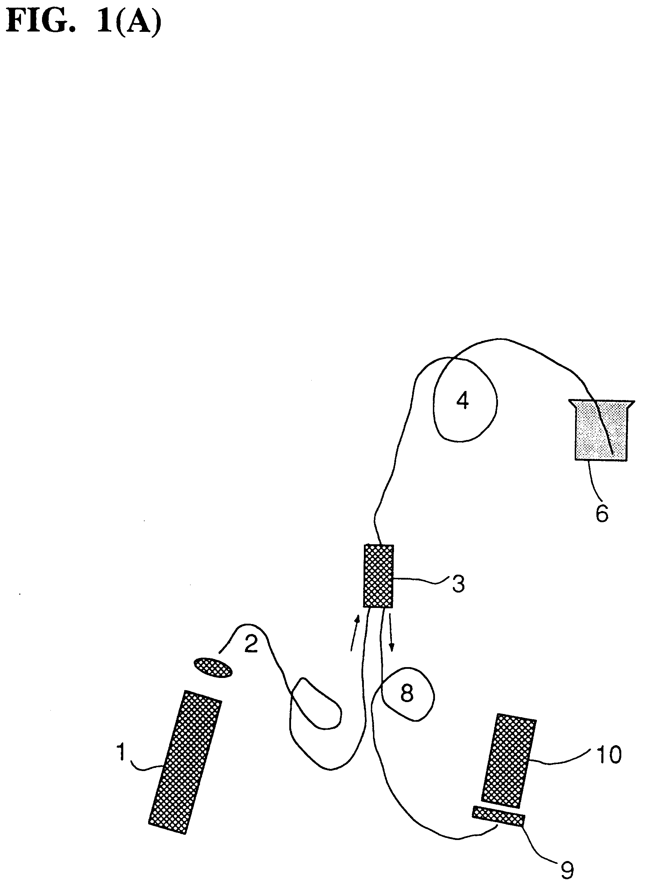

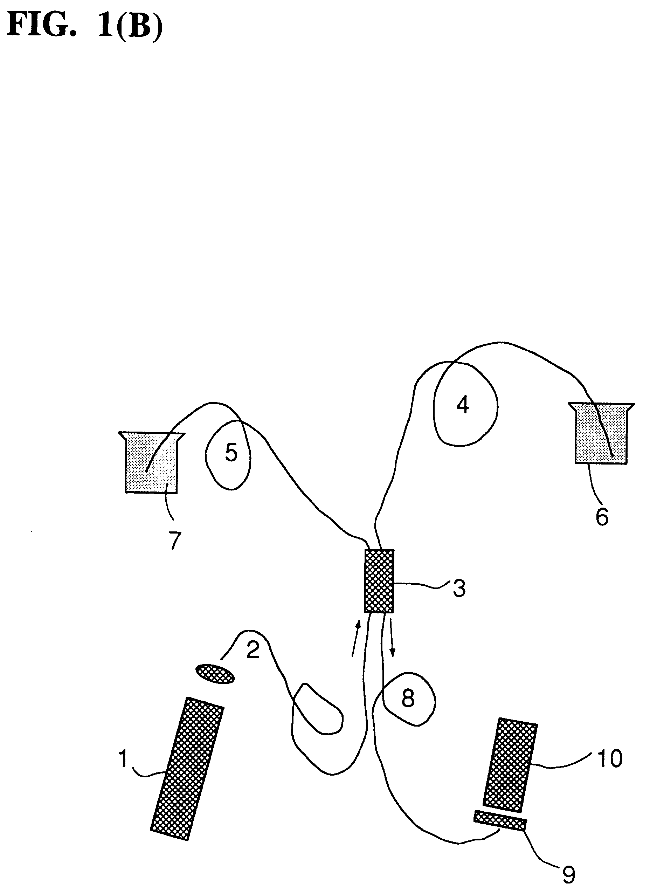

Das erfindungsgemäße Verfahren bzw. die erfindungsgemäße Vorrichtung ist in Fig. 1(A) im Prinzip dargestellt. Eine Lichtquelle 1, typischerweise ein Laser oder eine Laserdiode, sendet Anregungslicht aus das in eine erste Lichtleitfaser 2 eingespeist wird. Über einen Faserkoppler 3 und eine zweite Lichtleitfaser 4 wird das Anregungslicht einer Probe 6 zugeführt.

Die Partikel der Probe deren Strömungsgeschwindigkeit, Diffusionskoeffizient oder Volumenkonzentration gemessen werden soll, fluoreszieren oder sind mit fluoreszierenden Teilchen markiert. Das durch das zugeführte Anregungslicht stimulierte Fluoreszenzlicht wird von der zweiten Lichtleitfaser 4 aufgefangen und über den Faserkoppler 3 zu einem Detektor 10 geleitet. Es ist vorteilhaft, dem Detektor einen spektralen Filter 9 vorzuschalten um den infolge Reflexion an der Grenzfläche der Faser zurücklaufenden Teil des Anregungslichtes zu absorbieren.

Das erforderliche kleine Beobachtungsvolumen wird dadurch erreicht, daß das Anregungslicht aus dem Ende der zweiten Lichtleitfaser 4 direkt in die Probe 6 gelangt. Aufgrund des geringen Durchmessers der Faser von nur wenigen μm trifft das Anregungslicht annähernd in einem Zylinder von wenigen μm Durchmesser die fluoreszierenden Partikel in der Probe. Da auch die Eindringtiefe des Lichtes in der Probe in Längsrichtung der Faser gering ist, ergeben sich Beobachtungsvolumina im Bereich einiger Kubikmikrometer.

Der Verwendung einer Mikroskopoptik bedarf es nach vorliegender Erfindung nicht. Die Einfachheit und Robustheit des Versuchsaufbaues erlaubt auch den mobilen Einsatz einer FCS-Anlage. Aufgrund der außerordentlichen Kompaktheit der Lichtleitfasern können auch an engen oder schwer zugänglichen Stellen wie Rohrleitungen, Verbrennungsräumen von Motoren oder im menschlichen Körper FCS-Messungen durchgeführt werden.

Bei Verwendung eines 4-Tor-Faserkopplers ist es für die Detektion vorteilhaft, das Anregunglicht über eine weitere Lichtleitfaser 5 in eine Index-matching Flüssigkeit 7 zu leiten, wie in Fig. 1 (B) dargestellt. Sie verhindert, daß am Ende der Lichtleitfaser 5 Lichtreflexe auftreten, denn der Brechungsindex der Lichtleitfaser und der Index-matching Flüssigkeit sind gleich.

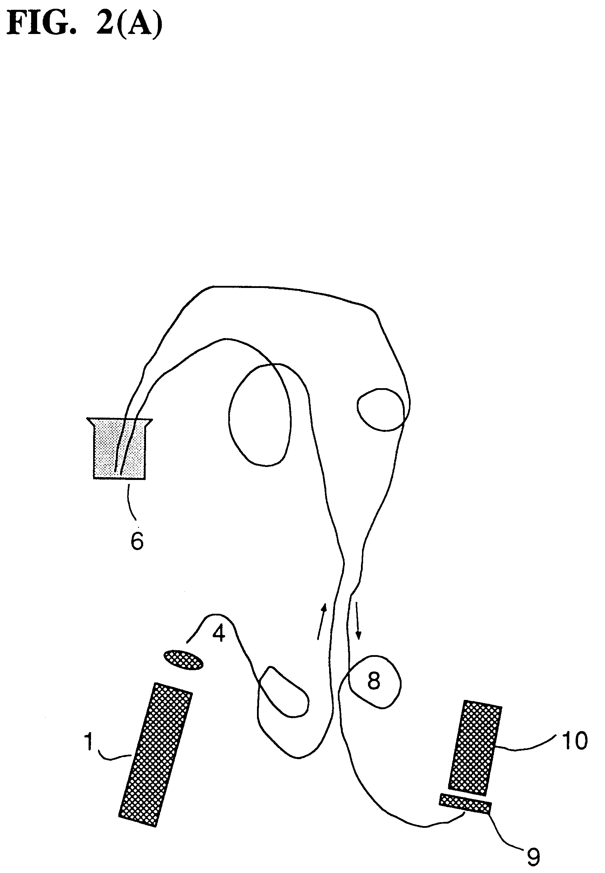

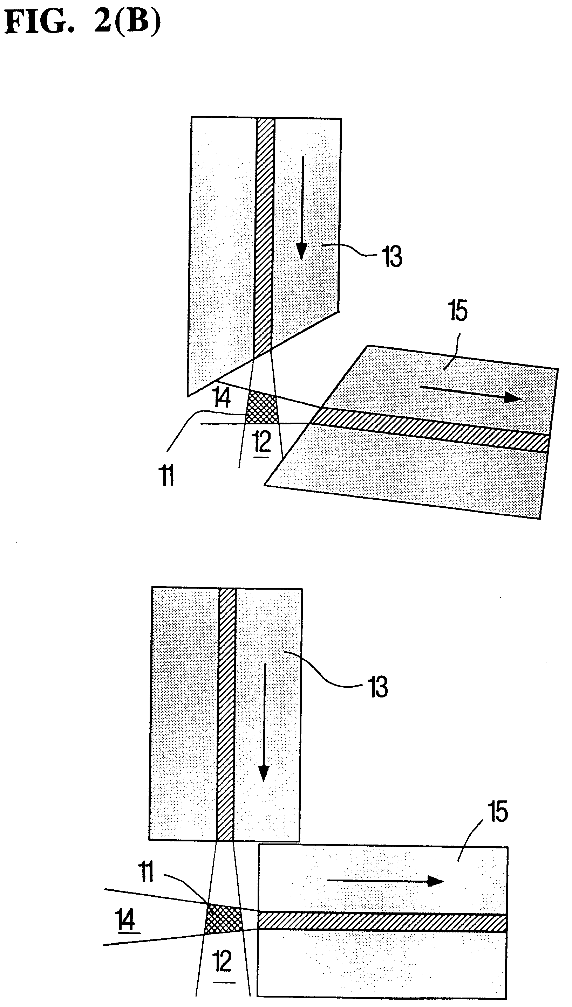

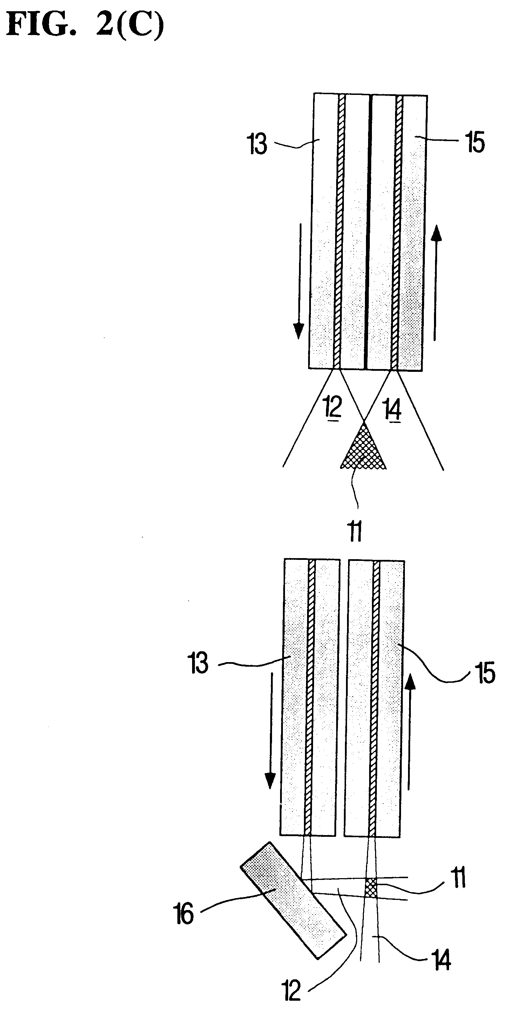

Eine Abwandlung der Erfindung ist in Fig. 2(A) in Prinzip dargestellt. Die Zuführung des von der Lichtquelle 1 ausgesandten Anregungslichtes zur Probe 6 und die Rückführung des detektierten Fluoreszenzlichtes zu dem Detektor 10 erfolgt hier durch zwei getrennte Lichtleitfasern 4 und 8. Diese können an die verschiedenen Wellenlängen von Anregungs- und Fluoreszenzlicht angepaßt sein. Ein spektraler Filter 7 vor dem Detektor ist vorteilhaft, da auch hier Anregungslicht in die Detektionsfaser gelangen kann. Um ein definiertes Beobachtungsvolumen zu erhalten müssen die Enden der beiden Lichtleitfasern während der Messung eine Position zueinander einnehmen, die es erlaubt, das Anregungslicht einem Probenbereich zuzuführen, aus dem Fluoreszenzlicht detektiert werden kann. Fig. 2(B) und 2(C) zeigen mehrere Möglichkeiten der Anordnung der Anregungsfaser 13 und der Detektionsfaser 15. Das Beobachtungsvolumen 11 ergibt sich aus der Überlappung des Lichtaustrittskegels 12 der Anregungsfaser und des Akzeptanzkegels 14 der Detektionsfaser. Das Anregungslicht kann dabei auch durch eine reflektierende Fläche 16 umgelenkt werden.

Bei einer bevorzugten Ausführungsform bestehen die Lichtleitfasern aus Monomoden-Lichtleitfasern. Diese haben einen deutlich geringeren Querschnitt gegenüber Multimoden-Lichtleitfasern, erlauben also eine weitere Reduzierung des Beobachtungsvolumens.

Bei einer bevorzugten Ausführungsform taucht das Ende einer oder beider Lichtleitfasern direkt in die Probe. Damit kann auf einfache Weise an jedem Ort der Probe gemessen werden, auch wenn dieser schwer zugänglich ist.

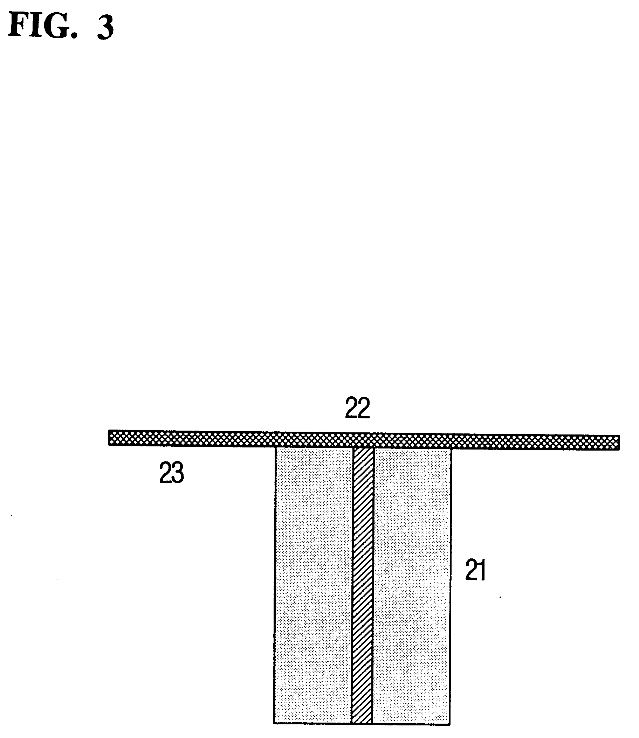

Bei einer anderen, in Fig. 3 dargestellten Ausführungsform wird eine Lichtleitfaser nicht direkt in die Probe 22 eingetaucht, sondern durch eine transparente Schicht 23 von der Probe getrennt. Die Trennschicht kann dabei auch Teil einer Gefäßwand sein. Dadurch ist die Durchführung von FCS-Messungen auch ohne unmittelbaren Probenkontakt möglich. Das ist von besonderem Vorteil, wenn etwa die Probe eine chemisch oder physikalisch schädliche Umgebung für die optische Faser darstellt.

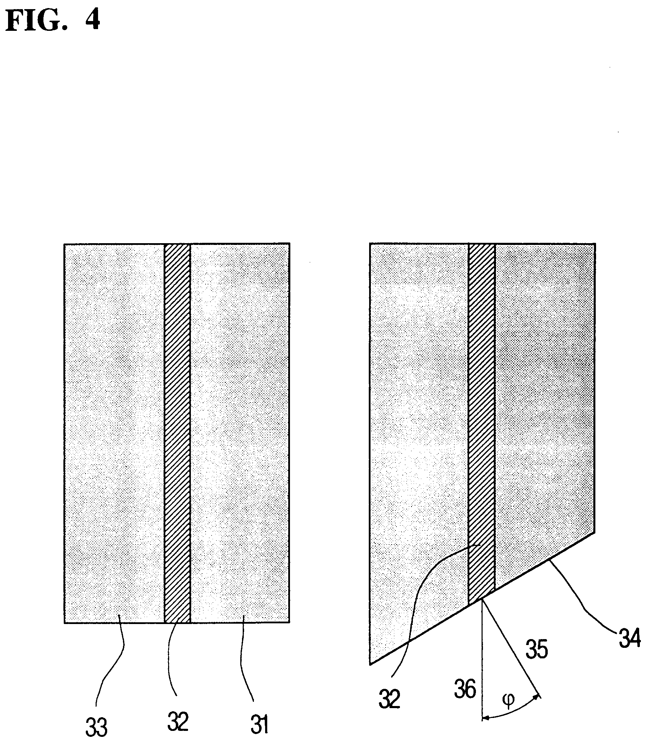

Eine weitere vorteilhafte Ausführungsform der Erfindung ist in Fig. 4 dargestellt. Das probenseitige Ende einer Lichtleitfaser, die aus dem Kern 32 und dem Mantel 31 bzw. 33 besteht, wird dabei angeschrägt, d.h. die Längsachse 36 der Faser schließt mit der Normalen 35 auf die Faserendfläche 34 einen Winkel φ ein, der größer als 1°, vorzugsweise 1° bis 10° beträgt. Der an der Grenzfläche 34 reflektierte Teil des Anregungslichtes läuft bei einer Anschrägung des Faserendes nicht mehr in den Kern 32 der Lichtleitfaser zurück. Das bei der Detektion des Fluoreszenzlichtes auftretende Untergrundsignal wird dadurch vermindert.

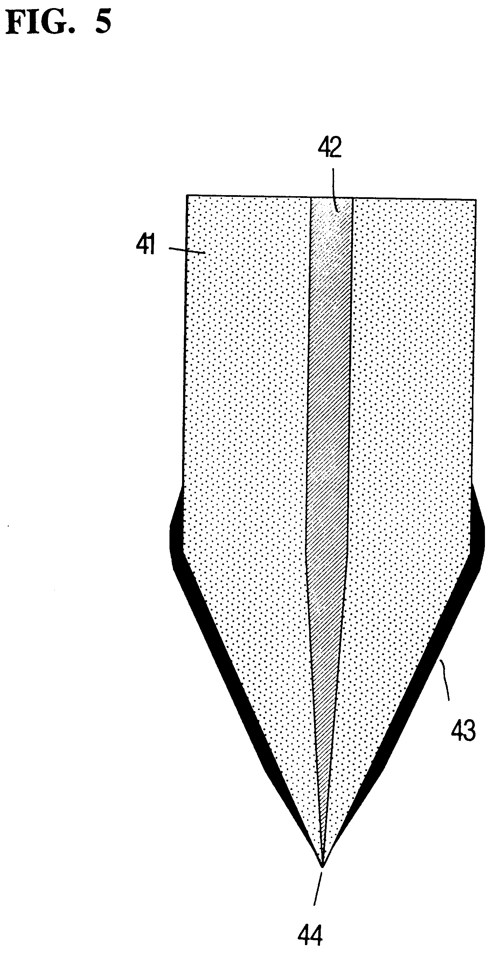

Fig. 5 zeigt eine weitere bevorzugte Ausführungsform der Erfindung. Das Ende einer Lichtleitfaser, die aus dem Mantel 41 und dem Kern 42 besteht, wird unter Hitze ausgezogen und die Spitze von der Seite mit einer Metallschicht 43 bedampft. Die Bedampfung erfolgt derart, daß direkt an der Spitze eine Öffnung 44 bleibt, die einen Durchmesser bis herab zu 20 nm haben kann. Dadurch kann das Beobachtungsvolumen gegenüber der Verwendung von Monomoden-Lichtleitfasern noch einmal deutlich reduziert werden.

Gezogene und metallbedampfte Faserspitzen sind aus der Scanning Near-Field Optical Microscopy (SNOM) bekannt, wie sie etwa von E. Betzig, J.K. Trautman, Science 257(1992), 189 und E. Betzig, R.J. Chichester, Science 262(1993), 1422 beschrieben wird. Bei der SNOM wird eine Faserspitze über eine Probenoberfläche geführt. Aus der ortsabhängigen Intensität des reflektierten Lichtes wird ein Abbild der Probenoberfläche gewonnen.

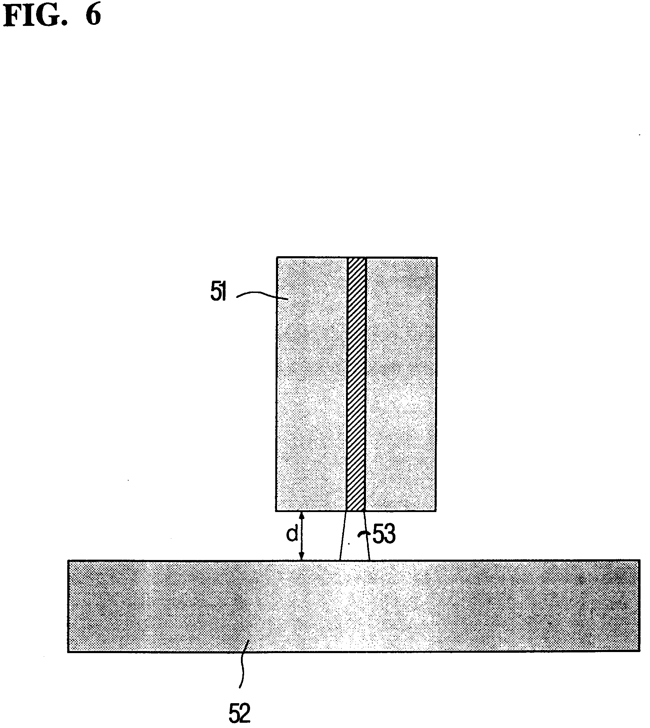

Bei der in Fig. 6 gezeigten bevorzugten Ausführungsform, wird im Abstand d kleiner 0,1 mm von dem Ende einer Lichtleitfaser 51 eine Platte 52 angebracht. Durch Veränderung des Abstandes d kann das Beobachtungsvolumen 53 nochmals verkleinert werden.

Die beschriebenen Verfahren und Vorrichtungen können auch miteinander kombiniert werden, so daß zu gleicher Zeit mehrere Proben gemessen werden können. Die Signaldetektion kann dabei parallel mit Hilfe mehrerer Detektoren oder seriell in einem Multiplexverfahren erfolgen.

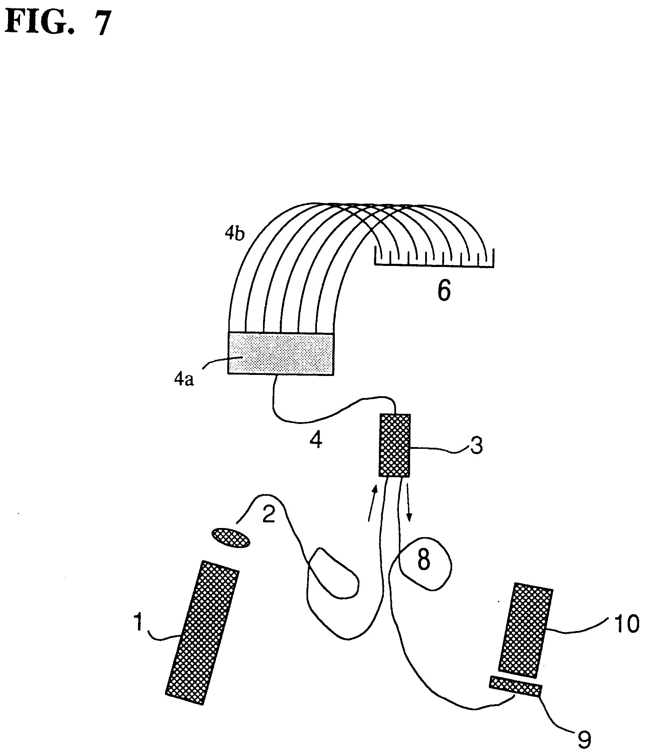

Die einfache und billige Fasertechnik eignet sich dabei besonders zum Multiplexbetrieb (Fig. 7). Das Anregungslicht wird dabei von der Lichtleitfaser 4 über den Multiplexer 4a und weitere Lichtleitfasern 4b zu den Proben 5 geleitet. In schnellem Wechsel wird Anregungslicht zu den verschiedenen Proben geleitet und Fluoreszenzlicht aus ihnen detektiert. In einer anderen Variant werden mehrere Lichtquellen über einen Multiplexer mit einer Probe verbunden. Dadurch kann gleichzeitig mit Anregungslicht verschiedener Wellenlänge gemessen werden, was etwa bei mehreren Partikelarten mit unterschiedlichem Fluoreszenzverhalten im gleichen Probenvolumen Vorteil ist.

Messbeispiel 1

Als Beispiel für die Anwendung der vorliegenden Erfindung wurde eine Anordnung entsprechend Fig. 1 dazu benutzt, die Strömungsgeschwindigkeit und Konzentration von fluoreszenzmarkierten Latexteilchen in Wasser zu messen.

Eine 0,2 Gew.-% Dispersion von Polystyrol-Latexteilchen mit Durchmesser 110 nm wurde in einem Gefäß gerührt. Die Latexteilchen waren mit dem Fluoreszensfarbstoff Tetramethylrhodamin markiert.

Eine angeschrägte Lichtleitfaser ($\phi$ = 8°) mit einem Kerndurchmesser von m = 3 μm tauchte in die Probenlösung. Fluoreszenzanregung geschah mit einem Argonionenlaser bei einer Wellenlänge von 514 nm. Detektiert wurde über einen 550 nm Langpass-Filter mit einem Photomultiplier.

Das am Detektors registrierte Signal wird auf einen elektronischen Hardware-Korrelator gegeben. Dieser Korrelator berechnet für einen variablen Zeitraum T von typischerweise 30 s aus dem zeitlichen Verlauf der Amplitude des Detektorsignals I(t) die Korrelationsfunktion k(t) entsprechend der Gleichung

$$k(t)=\frac{1}{T}\int_{\tau=0}^{T} I(\tau)\,I(\tau+t)\,d\tau$$

Aus dieser Korrelationsfunktion und dem mittleren Detektorsignal $I_m$

$$I_m=\frac{1}{T}\int_{t=0}^{T} I(t)\,d\tau$$

berechnet sich die normierte Autokorrelationsfunktion g(t)

$$g(t)=\frac{k(t)}{I_m^2}-1$$

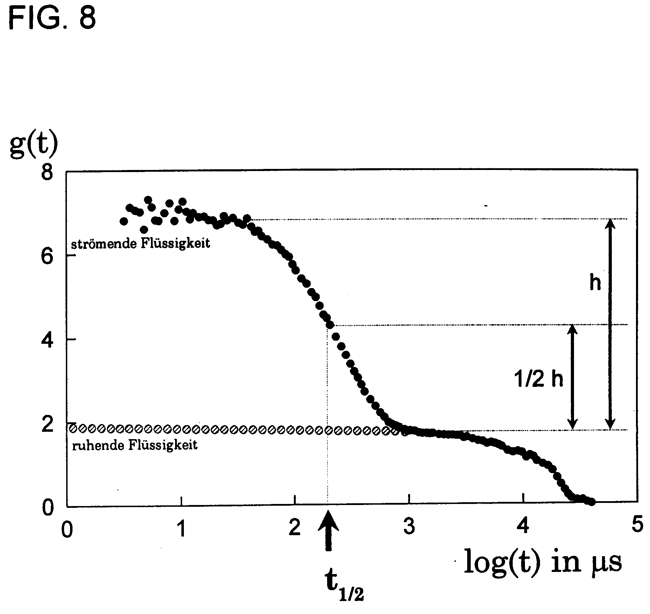

Die Strömung der fluoreszierenden Partikel führt zu einer Stufe in der normierten Autokorrelationsfunktion g(t) (Fig. 8). Die Lage dieser Stufe ist durch den Wert $t_{1/2}$ charaktrisiert. Die schraffierten Kreise geben den typischen Verlauf einer Autokorrelationsfunktion in einer ruhenden Latex-Dispersion für kurze Korrelationszeiten an.

Den Wert von $t_{1/2}$ erhält man aus der aufgetragenen normierten Autokorrelationsfunktion g(t), indem Anfangs- und Endwert der Stufe bestimmt werden. Ihre Differenz ist die Stufenhöhe h. Derjenige Zeitpunkt, zu dem die Stufe auf die Hälfte ihrer Höhe abgefallen ist, ist $t_{1/2}$.

Die fluoreszierende Partikel, die an der Stirnfläche einer Lichtleitfaser mit Kerndurchmesser m mit einer Geschwindigkeit v vorbeiströmen, befinden sich im Mittel für eine Zeit von $t_m$

$$t_m=\frac{\pi m}{4v}$$

im Austrittslicht des Kerns. Die Autokorrelationsfunktion g(t) klingt innerhalb der Zeit 0.5 $t_m$ auf die Hälfte ihres Wertes ab, d.h.

$$t_m=2\,t_{1/2}$$

Die gesuchte Strömungsgeschwindigkeit errechnet sich also aus der Meßgröße $t_{1/2}$ zu

$$v=\frac{\pi m}{8\,t_{1/2}}$$

Fig. 8 zeigt die gemessene normierte Autokorrelationsfunktion g(t). Der $t_{1/2}$-Wert wurde nach der oben beschriebenen Methode zu $t_{1/2}$ = 190 μs bestimmt. Daraus berechnet sich eine mittlere Stömungsgeschwindigkeit der Latex-Partikel von 6.2 mm/s. Variation der Drehzahl des Rührers führt zu schnelleren oder langsameren Strömungsgeschwindigkeiten.

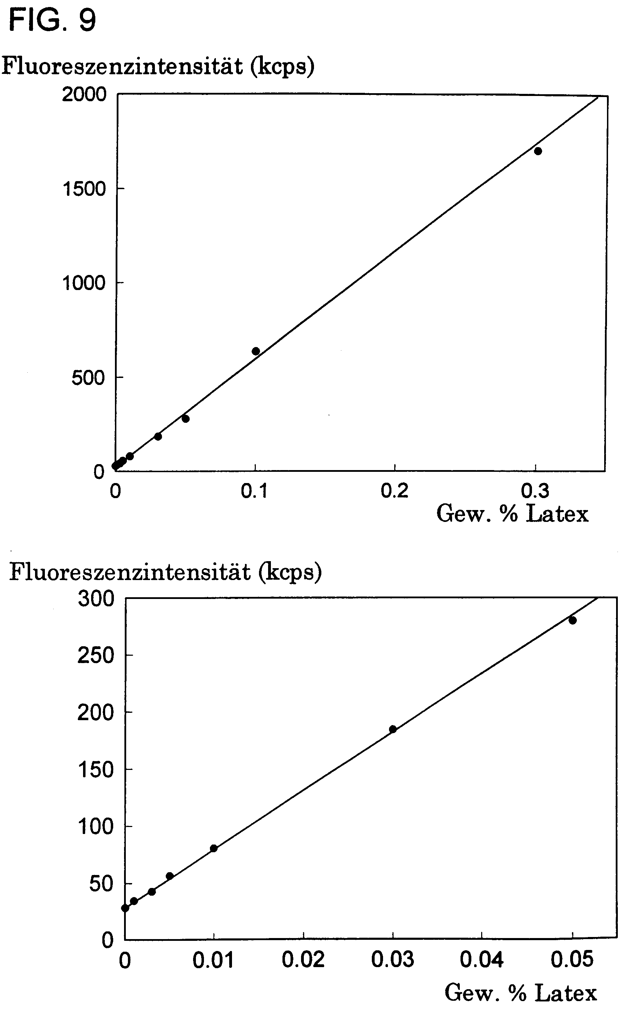

Fig. 9 zeigt die gemessene Fluoreszenzintensität in Abhängigkeit von der Konzentration der Latexteilchen. Es besteht über einen großen Bereich eine linearer Zusammenhang zwischen der Konzentration der Partikel und der gemessenen Intensität, so daß mit Fig. 9 als Eichkurve bei unbekannten Proben die Konzentration derartiger Latexteilchen ermittelt werden kann. Die beiden Graphiken in Fig. 9 zeigen, daß die Linearität der Meß- bzw. Eichkurve über einen großen Konzentrationsbereich besteht.

Messbeispiel 2

Bewegen sich die fluoreszierenden Partikel nur unter dem Einfluß der Diffusion, so hat die gemessene normierte Autokorrelationsfunktion die Form

$$g(t)=\beta\left(\frac{1}{1+\frac{t}{\tau}}\right)$$

wobei τ die mittlere Diffusionszeit ist, die die Partikel brauchen, um eine Strecke von der Länge des Kerndurchmessers m zurückzulegen. Diese Zeit τ hängt mit m über den Diffusionskoeffizienten D zusammen:

$$m^2 = 4\,D\,\tau$$

Für kugelförmige Partikel mit Durchmesser a berechnet sich der Diffusuinskoeffizient direkt aus der Partikelgröße:

$$D=\frac{kT}{3\pi\eta\,a}$$

Dabei ist k die Boltzmann-Konstante, T die Temperatur und η die Viskosität des umgebenden Mediums.

Paßt man also an eine gemessene Autokorrelationsfunktion eine Kurve g(t) nach obiger Formel an, so kann man aus dem erhaltenen Wert für τ die Größe a des Partikels bestimmen:

$$a=\frac{4kT\tau}{3\pi\eta\,m^2}$$

Ändert sich die scheinbare hydrodynamische Größe eines fluoreszierenden Partikels durch Anlagerung an ein anderes Teilchen, so ist diese Zusammenlagerung über eine Änderung des τ-Wertes meßbar.

**Patentansprüche**

1. Verfahren zur Fluoreszenz-Korrelations-Spektroskopie, **dadurch gekennzeichnet**, daß von einer Lichtquelle (1) ausgesandtes Anregungslicht mittels einer ersten Lichtleitfaser (2) zu einem Faserkoppler (3) und von dort mittels einer zweiten Lichtleitfaser (4) zu einer Probe (6) geleitet wird, von Probenpartikeln ausgesandtes Fluoreszenzlicht mittels der zweiten Lichtleitfaser zu dem Faserkoppler (3) und von dort mittels einer dritten Lichtleitfaser (8) zu einem Detektor (10) geleitet wird.

2. Verfahren zur Fluoreszenz-Korrelations-Spektroskopie, dadurch gekennzeichnet, daß von einer Lichtquelle (1) ausgesandtes Anregungslicht mittels einer ersten Lichtleitfaser (4) zu einer Probe (6) geleitet wird, von Probenpartikeln ausgesandtes Fluoreszenzlicht mittels einer weiteren Lichtleitfaser (8) zu einem Detektor (10) geleitet wird und die probenseitigen Enden der Lichtleitfasern so zu einander orientiert sind, daß ausgesandtes Anregungslicht in einen Probenbereich gelangt aus dem das Fluoreszenzlicht detektiert wird.

3. Verfahren nach Ansprüchen 1 oder 2, dadurch gekennzeichnet, daß eine oder mehrere der Lichtleitfasern Monomoden-Lichtleitfasern sind.

4. Verfahren nach Ansprüchen 1, 2 oder 3, dadurch gekennzeichnet, daß das probenseitige Ende einer oder beider, Lichtleitfaser(n) direkt in die Probe getaucht wird.

5. Verfahren nach einem der vorhergehenden Ansprüche, dadurch gekennzeichnet, daß das probenseitige Ende einer oder beider Lichtleitfaser(n) durch eine transparente Schicht von der Probe getrennt ist (sind).

6. Verfahren nach einem der vorhergehenden Ansprüche, dadurch gekennzeichnet, daß die Normale auf die probenseitige Endfläche der Lichtleitfaser bei einer oder beiden Lichtleitfaser(n) mit der Faserachse einen Winkel von mindestens 1°, vorzugsweise einen Winkel einschließt, bei dem der reflektierte Teil des Anregungslichtes nicht mehr in den Kern der Faser zurückläuft.

7. Verfahren nach einem der vorhergehende Ansprüche, dadurch gekennzeichnet, daß das probenseitige Ende einer oder beider Lichtleitfaser(n) als gezogene Spitze ausgebildet und mit einer Metallschicht bedampft wird.

8. Verfahren nach einem der vorhergehenden Ansprüche, dadurch gekennzeichnet, daß im Abstand d kleiner 0,1 mm von dem probenseitigen Ende einer Lichtleitfaser eine Platte angebracht wird.

9. Verfahren nach einem der vorhergehenden Ansprüche, dadurch gekennzeichnet, daß das probenseitige Ende einer oder beider Lichtleitfaser(n) mit dem Eingang eines Multiplexers verbunden ist, dessen mehrere Ausgänge mittels Lichtleitfasern mit mehreren Proben verbunden sind, oder daß mehrere Lichtquellen über einen Multiplexer mit dem zur Probe führenden Lichtleitfaser verbunden sind.

10. Vorrichtung zur Durchführung der Fluoreszens-Korrelations-Spektroskopie nach einem der Ansprüche 1 bis 9, bestehend aus einer Lichtquelle (1) die mittels einer ersten Lichtleitfaser (2) mit einem Faserkoppler (3) verbunden ist, einer zweiten Lichtleitfaser (4) durch die der Faserkoppler (3) mit einer Probe (6) verbunden ist, einem Detektor (10), der mittels einer dritten Lichtleitfaser (8) mit dem Faserkoppler (3) verbunden ist.

11. Vorrichtung zur Durchführung der Fluoreszens-Korrelations-Spektroskopie nach einem der Ansprüche 1 bis 9, bestehend aus einer Lichtquelle (1), die mittels einer Lichtleitfaser (4) mit einer Probe verbunden ist, einem Detektor (10), der mittels einer Lichtleitfaser (8) mit der Probe (6) verbunden ist und mit einer Orientierung der probenseitigen Enden der Lichtleitfasern so zueinander, daß ausgesandtes Anregungslicht in einen Probenbereich gelangt aus dem Floreszenzlicht detektiert wird.

12. Vorrichtung nach Ansprüchen 10 oder 11, dadurch gekennzeichnet, daß eine oder mehrere Lichtleitfasern Monomoden-Lichtleitfasern sind.

13. Vorrichtung nach Ansprüchen 10, 11 oder 12, dadurch gekennzeichnet, daß das probenseitige Ende einer oder beider Lichtleitfaser(n) für direktes Eintauchen in die Probe ausgelegt ist.

14. Vorrichtung nach einem der Ansprüche 10 bis 13, dadurch gekennzeichnet, daß das probenseitige Ende einer oder beider Lichtleitfaser(n) durch eine transparente Schicht von der Probe getrennt ist.

15. Vorrichtung nach einem der Ansprüche 10 bis 14, dadurch gekennzeichnet, daß die Normale auf die probenseitige Endfläche der Lichtleitfaser bei einer oder beider Lichtleitfaser(n) mit der Faserachse einen Winkel von mindestens 1°, vorzugsweise einen Winkel einschließt, bei dem der reflektierte Teil des Anregungslichtes nicht mehr in den Kern der Faser zurückläuft.

16. Vorrichtung nach einem der Ansprüche 10 bis 15, dadurch gekennzeichnet, daß das probenseitige Ende einer oder beider Lichtleitfaser(n) als gezogene Spitze ausgebildet und mit einer Metallschicht bedampft ist.

17. Vorrichtung nach einem der Ansprüche 10 bis 16, dadurch gekennzeichnet, daß im Abstand d kleiner 0,1 mm von dem probenseitigen Ende einer Lichtleitfaser eine Platte angebracht ist.

18. Vorrichtung nach einem der Ansprüche 10 bis 17, dadurch gekennzeichnet, daß das probenseitige Ende einer oder beider Lichtleitfaser(n) mit dem Eingang eines Multiplexers verbunden ist, dessen mehrere Ausgänge mittels Lichtleitfasern mit mehreren Proben verbunden sind, oder daß mehrere Lichtquellen über einen Multiplexer mit dem zur Probe führenden Lichtleitfaser verbunden sind.

# FIG. 1(A)

# FIG. 1(B)

# FIG. 2(A)

# FIG. 2(B)

# FIG. 2(C)

# FIG. 3

# FIG. 4

33 32 31

32 36 φ 35 34

# FIG. 5

# FIG. 6

# FIG. 7

FIG. 8

## FIG. 9

Fluoreszenzintensität (kcps)

Gew. % Latex

Fluoreszenzintensität (kcps)

Gew. % Latex

Europäisches
Patentamt

**EUROPÄISCHER RECHERCHENBERICHT**

Nummer der Anmeldung

EP 95 11 2947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 099 266 (SYVA COMPANY)<br><br>* Seite 12, Zeile 12 - Seite 13, Zeile 35; Abbildung 1 *<br>* Seite 2, Zeile 1-17 *<br>--- | 1,4,10, 13 | G01N21/64<br>G01P5/00 |
| X | EP-A-0 175 545 (SYNTEX (USA) INC)<br><br>* Seite 2, Zeile 25 - Seite 3, Zeile 14 *<br>* Seite 6, Zeile 1-25 *<br>* Seite 12, Zeile 29 - Seite 13, Zeile 12 *<br>--- | 1,4,10, 13 | |
| X<br><br>Y | US-A-4 748 129 (CHANG ET AL.)<br><br><br><br>* Spalte 8, Zeile 6-51 *<br>* Spalte 9, Zeile 28-45 *<br>--- | 1,4,10, 13<br>2,3,6, 11,12,15 | |
| Y | US-A-5 284 149 (DHADWAL ET AL.)<br><br>* Spalte 1, Zeile 5-33 *<br>* Spalte 2, Zeile 3-16 *<br>* Spalte 7, Zeile 60 - Spalte 8, Zeile 2 *<br>--- | 2,3,6, 11,12,15 | RECHERCHIERTE SACHGEBIETE (Int.Cl.6)<br><br>G01N<br>G01P |
| A | US-A-5 012 809 (SHULZE)<br>* Spalte 9, Zeile 6-19; Abbildung 4 *<br>* Spalte 9, Zeile 63 - Spalte 10, Zeile 18; Abbildung 5 *<br>--- | 8,17 | |
| A | EP-A-0 295 546 (BASF)<br><br>* Spalte 5, Zeile 3-32; Anspruch 1; Abbildungen 1,3 *<br>--- | 1,6,10, 15 | |
| A | DE-A-32 35 369 (BASF)<br>* Seite 6, Zeile 20 - Seite 7, Zeile 14 *<br>--- | 1,10 | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 28.Dezember 1995 | Zinngrebe, U |

EPO FORM 1503 03.82 (P04C03)

**Europäisches Patentamt**

# EUROPÄISCHER RECHERCHENBERICHT

Nummer der Anmeldung

EP 95 11 2947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-4 407 964 (ELINGS ET AL.)<br><br>* Spalte 2, Zeile 51 - Spalte 3, Zeile 14 *<br><br>* Spalte 5, Zeile 22-39 *<br>----- | 1,5,10,14 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 28.Dezember 1995 | Zinngrebe, U |